(19) Europäisches Patentamt
European Patent Office
Office européen des brevets

(11) EP 0 543 225 B1

(12) # EUROPÄISCHE PATENTSCHRIFT

(45) Veröffentlichungstag und Bekanntmachung des Hinweises auf die Patenterteilung:
**28.02.1996 Patentblatt 1996/09**

(51) Int Cl.6: **C08F 8/00**, C08F 8/30

(21) Anmeldenummer: **92118948.6**

(22) Anmeldetag: **05.11.1992**

(54) **Carbamidsäureester, Verfahren zu ihrer Herstellung sowie Kraft- und Schmierstoffe, enthaltend die Carbamidsäureester**

Carbamate compounds, process for their manufacture and fuels and lubricants containing these carbamates

Carbamates, leur procédé de préparation, et combustibles et lubrifiants contenants ces carbamates

(84) Benannte Vertragsstaaten:
**AT BE DE ES FR GB IT**

(30) Priorität: **16.11.1991 DE 4137852**

(43) Veröffentlichungstag der Anmeldung:
**26.05.1993 Patentblatt 1993/21**

(73) Patentinhaber: **BASF Aktiengesellschaft**
**D-67063 Ludwigshafen (DE)**

(72) Erfinder:
- **Mohr, Juergen, Dr.**
  **W-6718 Gruenstadt (DE)**
- **Oppenlaender, Knut, Dr.**
  **W-6700 Ludwigshafen (DE)**
- **Balzer, Wolf-Dieter, Dr.**
  **W-6700 Ludwigshafen (DE)**
- **Thomas, Juergen, Dr.**
  **W-6701 Fussgoenheim (DE)**
- **Schreyer, Peter, Dr.**
  **W-6940 Weinheim (DE)**

(56) Entgegenhaltungen:
**EP-A- 0 244 616** **EP-A- 0 414 963**
**US-A- 4 322 305** **US-A- 4 680 129**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 543 225 B1

## Beschreibung

Die Erfindung betrifft Carbamidsäureester (Carbamate) mit einem langkettigen N-Alkylrest, ein Verfahren zur Herstellung der Carbamidsäureester in an sich bekannter Weise sowie Kraft- und Schmierstoffe, welche diese Carbamidsäureester als Additive enthalten.

Vergaser und Einlaßsystem von Ottomotoren, aber auch Einspritzsysteme für die Kraftstoffdosierung in Otto- und Dieselmotoren werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht weren.

Diese Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (vgl. z.B. M. Rossenbeck in Katalysatoren, Tenside, Mineralöladditive, Hrs. J. Falbe, U. Hasserodt, S. 223 f., G. Thieme Verlag, Stuttgart 1978).

Je nach Wirkungsweise aber auch nach dem bevorzugten Wirkort solcher Detergens-Additive unterscheidet man heute zwei Generationen.

Die erste Additiv-Generation konnte nur die Bildung von Ablagerungen im Ansaugsystem verhindert, nicht aber bereits vorhandene Ablagerungen im Ansaugsystem entfernen, wohingegen die modernen Additive der zweiten Generation beides bewirken können ("keep-clean-" und "clean-up-Effekt") und zwar aufgrund veränderter thermischer Eigenschaften, insbesondere auch an Zonen hoher Temperaturen, nämlich an den Einlaßventilen.

Die EP-A 414 963 beschreibt Carbamate, die als Kraftstoffadditive eingesetzt werden. Diese Carbamate werden insbesondere aus halogenhaltigen Ausgangsprodukten hergestellt und der Carbamat-Stickstoff weist neben einem Polyolefin-Substituenten noch einen weiteren Kohlenwasserstoffrest auf. Die bekannten Additive sollen die Bildung von Ablagerungen im Brennraum verhindern, die oben dargestellten Verunreinigungen an Ventilen und Einlaßsystem werden nicht erwähnt.

Nach wie vor unklar bleibt darüber hinaus die Beeinflussung des Schmierstoffs durch Kraftstoffadditive, die in geringer Menge aber stetig über den Brennraum in den Schmiermittelkreislauf eines Motors gelangen.

Auf keinen Fall dürfen solche Zusätze, einmal in den Schmierstoff gelangt, dessen Eigenschaften und Funktion negativ beeinflussen. Insbesondere im Hinblick auf die Bildung und Dispergierung des Ölschlamms wird daher auch der Einfluß der Kraftstoffadditive berücksichtigt. Die meisten der bekannten Detergentien verhalten sich allerdings ölschlammneutral.

Möchte man darüber hinaus einen positiven Effekt des Kraftstoffs bzw. der darin enthaltenen Wirkstoffs auf den Schmierstoff erzielen, dann ist die zusätzliche Additivierung des Kraftstoffs mit dispergierenden Substanzen sinnvoll.

Ideal in diesem Zusammenhang und von besonderem technischen Interesse wären solche Stoffe, die gleichzeitig die Eigenschaften sowohl von Detergentien als auch von Dispergatoren in sich vereinigen.

Es bestand daher die Aufgabe, Stoffe zu Verfügung zu stellen, die als Additive in Kraftstoffen außer ihrer positiven Wirkung im Einlaßsystem eines Ottomotors zusätzlich eine ölschlamm-dispergierende Wirkung aufweisen. Derartige Stoffe wären auch vorteilhaft als Schmierstoffaddtive verwendbar.

Diese Aufgabe wurde gelöst mit Carbamidsäureestern der folgenden allgemeinen Formel I

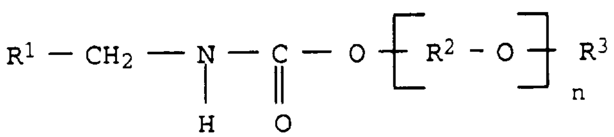

I

worin bedeuten

- $R^1$ einen von Isobuten und 0 bis 30 Gew.-% n-Buten abgeleiteter Polybutyl- oder Polyisobutylrest mit einem Molekulargewicht von 250 bis 5000,
- $R^2$ einen ggfs. verzweigten $C_2$-$C_6$-Alkylenrest und
- $R^3$ entweder Wasserstoff, wobei n = 1-4 ist, oder einen $C_1$-$C_6$-Alkylrest, wobei n = 0-4 ist.

Überraschend wurde gefunden, daß die erfindungsgemäßen Carbamate von Polyisobutylaminen neben ihrer ventilreinigenden Wirkung auch positiv auf das Schlammtragevermögen von schwach oder gar nicht additivierten Motorenölen einwirken.

Gegenstand der vorliegenden Erfindung sind daher auch Kraft- und Schmierstoffe, welche die erfindungsgemäßen Carbamidsäureester als Additive enthalten.

Bevorzugt sind solche Carbamidsäureester, in denen $R^2$ der folgenden Formel II entspricht

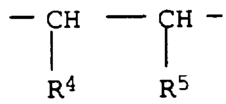

II

worin $R^4$ und/oder $R^5$ Wasserstoff, Methyl oder Ethyl bedeuten, $R^3$ gleich Wasserstoff und n = 1 ist, und in denen $R^1$ ein Polyisobutylrest mit einem Molekulargewicht von 500 bis 2000 ist.

Werden die Carbamidsäureester in Kraftstoffen eingesetzt, so gibt man sie bevorzugt in einer Menge von 10 bis 5000 ppm, insbesondere 50 bis 1000 ppm zu. In Schmierstoffen muß in der Regel höher additiviert werden, die Mengen können hier 0,1 bis 6 Gew.-%, insbesondere 0,5 bis 5 Gew.-% betragen.

Sollen in erster Linie die dispergierenden Eigenschaften der Carbamidsäureester genutzt werden, so kann man sie in Kraftstoffen auch mit herkömmlichen Detergentien Kraftstoff-Detergens als zusätzlichen Additiven kombinieren.

Als Detergens-Komponente in der Mischung mit dem erfindungsgemäßen Dispergator kann prinzipiell jedes bekannte, der hierfür geeigneten Produkte eingesetzt werden, wie sie z.B. bei J. Falbe, U. Hasserodt, Katalysatoren, Tenside und Mineralöladditive, G. Thieme Verlag Stuttgart 1978, S. 221 f. oder bei K. Owen, Gasoline and Diesel Fuel Additives, John Wiley & Sons 1989, S. 23 ff., beschrieben sind.

Vorzugsweise verwendet man N-haltige Detergentien, z.B. Verbindungen, die eine Amin- oder Amid-Gruppe enthalten. Insbesondere geeignet sind Polyisobutylamine gemäß EP-A 244 616, Ethylendiamintetraessigsäureamide und/oder -imide gemäß EP-A 188 786 oder Polyetheramine gemäß EP-A 356 725, wobei auf die Definitionen in diesen Literaturstellen Bezug genommen wird. Die dort beschriebenen Produkte verfügen herstellungsbedingt über den zusätzlichen Vorteil, nahezu chlor- bzw. chloridfrei zu sein.

Die genannten Detergentien zeigen meist eine ausgezeichnete Wirksamkeit in der Ventil- und Vergaserreinhaltung, verhalten sich jedoch, wie oben bereits erwähnt, allenfalls neutral d.h. ohne nachteilige Wirkung auf einen Motorschmierstoff, zeigen also keinen positiven Effekt hinsichtlich einer erwünschten Schlammdispergierung.

Gegenstand der Erfindung ist weiterhin ein Verfahren zur Herstellung der Carbamidsäureester der Formel I, bei dem man Amine der allgemeinen Formel III

$$R^1\text{-}CH_2\text{-}NH_2 \qquad \text{III}$$

in der $R^1$ die oben angegebene Bedeutung hat, mit aktivierten Kohlensäurederivaten der allgemeinen Formel IV in äquimolaren Mengen umsetzt

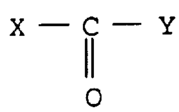

IV

worin X und Y unabhängig voneinander Chlor oder

$$-O-\left[R^2-O\right]_n-R^3 \qquad \text{V}$$

bedeuten, wobei $R^2$ und $R^3$ die im Anspruch 1 angegebene Bedeutung haben, mit der Maßgabe, daß X und Y zusammen einen carbocyclischen Ring bilden können, so daß eine Verbindung der folgenden Formel IVa resultiert:

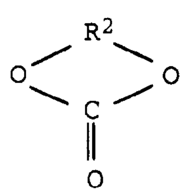

IVa

worin $R^2$ der Formel II entspricht,

wobei in dem Fall, daß X = Y = Cl ist, das aus der Umsetzung von III und IV resultierende Produkt noch mit einem Alkohol der Formel VI

$$HO-\left[R^2-O\right]_n-R^3 \qquad VI$$

in der $R^2$, $R^3$ und n die im Anspruch 1 angegebenen Bedeutungen haben,
umgesetzt wird.

Zur Herstellung der Carbamidsäureester der Formel I werden Polyisobutylamine der Formel III, bevorzugt erhalten durch Hydroformylierung und anschließende reduktive Aminierung von reaktiven Polyisobutenen gemäß EP-A 244 616, worauf hiermit Bezug genommen wird, nach an sich bekanntem Verfahren mit den Kohlesäurederivaten der Formel IV umgesetzt. Die Umsetzung kann z.B. in Kohlenwasserstoffen als Reaktionsmedium bei erhöhter Temperatur erfolgen. Bevorzugt werden dabei Cl-freie Kohlensäurederivate eingesetzt.

Das verwendete Polyisobuten hat ein Molekulargewicht von 250 bis 5000, vorzugsweise zwischen 500 und 2000. Es wird nach bekanntem Verfahren durch kationische Polymerisation von Isobuten erhalten, wobei nach Abbruch der Polymerkette im zuletzt eingebauten Monomeren eine reaktive Doppelbindung verbleibt, die zum Zwecke der weiteren Funktionalisierung genutzt werden kann.

Bevorzugt werden als Kohlensäurederivate deren Ester eingesetzt. Als besonders geeignet erwiesen sich hier wiederum cyclische Kohlensäurediester, vor allem die cyclischen Ester von Glykolen wie Ethylen-, Propylen- oder Butylenglykol, d.h. Ethylencarbonat, Propylencarbonat oder Butylencarbonat, die nach Umsetzung mit den Aminen die jeweiligen Carbamate mit den Glykolen als Alkoholkomponenten liefern.

Die Synthese von Carbamaten durch Aminolyse von Kohlensäureestern ist im Prinzip bekannt und z.B. beschrieben in Houben-Weyl, Methoden der Organischen Chemie, Band E 4, Kohlensäure-Derivate, G. Thieme Verlag Stuttgart 1983, S. 159 f.; sie kann generell mit primären oder sekundären Aminen durchgeführt werden.

In diesem Zusammenhang ist in Houben-Weyl, aaO, die US-A 3 076 007 erwähnt, aus der Carbamidsäureester bekannt sind, die jedoch einen vollständig anderen Rest R am Stickstoff aufweisen und für die Isocyanat-Erzeugung vorgesehen sind.

Als Kraftstoffe für Ottomotoren kommen verbleites und unverbleites Normal- und Superbenzin in Betracht. Die Benzine können auch andere Komponenten als Kohlenwasserstoffe, z.B. Alkohole wie Methanol, Ethanol, tert. Butanol sowie Ether, z.B. Methyltertiärbutylether enthalten. Neben den erfindungsgemäß zu verwendenden alkoxylierten Polyisobutylaminen enthalten die Kraftstoffe in der Regel noch weiter Zusätze wie Korrosionsinhibitoren, Stabilisatoren, Antioxydantien und/oder weitere Detergentien.

Korrosionsinhibitoren sind meist Ammoniumsalze organischer Carbonsäuren, die durch entsprechende Struktur der Ausgangsverbindung zur Filmbildung neigen. Auch Amine zur Anhebung des pH-Wertes finden sich häufig in Korrosionsinhibitoren. Als Buntmetallkorrosionsschutz werden meist heterocyclische Aromaten eingesetzt.

Die Prüfung der Produkte auf ihre Eignung als Kraftstoffadditive erfolgte mittels Motorentest:

Nach CEC-F-02-T-79 wurde die Wirkung als Ventilreiniger getestet.

Ihre Eignung als Dispergatoren für Schmutzpartikel im Motorenöl wurde gemäß DKA-Vorschlag in einem Daimler-Benz M 102 E-Motor durchgeführt.

## Beispiele

### 1.1. Herstellungsbeispiel für ein Carbamat

300 g eines Polyisobutylamins (ca. 0,3 mol), hergestellt nach den Angaben von DE-A 36 11 230 aus einem Polyisobuten einer mittleren Molmasse von ca. 1000, wurden in 300 ml Isododekan zusammen mit 26 g Ethylencarbonat vorgelegt und gemischt. Man erwärmte 0,5 bis 1 h lang auf 140°C, danach war die Reaktion nahezu vollständig.

Das Endprodukt, ein Glykolcarbamat, zeigte im IR-Spektrum Absorptionsbanden bei 1680 bis 1730 $cm^{-1}$ für C = O und bei 3300 bis 3400 $cm^{-1}$ für OH.

1.2 Ergebnisse der Motortests

1.2.1 Prüfung als Ventilreiniger

| Produkt | Ablagerungen [mg]* Ventil-Nr 1 | 2 | 3 | 4 |
|---|---|---|---|---|
| Polyisobutylamin nach DE-A 36 11 230 | 1 | 0 | 0 | 2 |
| Beispiel 1.1 | 0 | 0 | 0 | 1 |

*nach CEC-F-02-T-79

1.2.2. Prüfung der dispergierenden Wirkung im Daimler Benz M 102 E

Als Prüfkraftstoff wurde ein DKA-Batch 4/4 eingesetzt. Das verwendete Motorenöl war das Referenzöl RL 140.

Es wurden Prüfläufe mit nicht additiviertem Benzin (Grundwert) sowie mit 250 ppm an Prüfsubstanz, und als Vergleich hierzu mit 250 ppm Polyisobutylamin gefahren.

Nach Beendigung der Prüflaufe wurde der Motor zerlegt und nach 24 Stunden Abtropfzeit bewertet. Die Bewertung (Rating) des optischen Aussehens der einzelnen Motorenteile für das als Additiv eingesetzte Carbamat aus 1.1. nach DKA-Vorschrift enthält die folgende Tabelle:

| | | Rating (Skala 1-10) | |
|---|---|---|---|
| Motorenteil | Grundwert | Zusatz von 250 ppm Carbamat | Zusatz von 250 ppm Polyisobutylamin |
| Zylinderkopfhaube | 8.8 | 9 .3 | 8.9 |
| Ölverteilungsrohr | 8.9 | 9 .3 | 8.5 |
| Zylinderkopf | 8.3 | 9 .2 | 8.5 |
| Ölwanne | 8.2 | 9 .3 | 8.9 |
| Steuerungsgehäusedeckel | 9.0 | 9 .2 | 8.6 |
| Mittelwert | 8.6 | 9 .3 | 8.7 |

Die Tabelle zeigt die vorteilhafte Wirkung des erfindungsgemäß verwendeten Carbamidsäureesters im Vergleich zum Ausgangs-Polyisobutylamin. Durch die dispergierenden Eigenschaften des Carbamats gelingt es, den Mittelwert aus dem Rating der einzelnen Motorenteile von 8,6 auf 9,3 anzuheben (max. 10). Die Verwendung von Polyisobutylamin hingegen führt zu keiner wesentlichen Verbesserung gegenüber dem Grundwert.

Die erfindungsgemäßen Carbamate verhindern somit nicht nur die Bildung von Ablagerungen im Vergaser und Einlaßsystem, sondern weisen zusätzlich noch eine Ölschlamm-dispergierende Wirkung auf.

**Patentansprüche**

**1.** Carbamidsäureester der folgenden Formel I

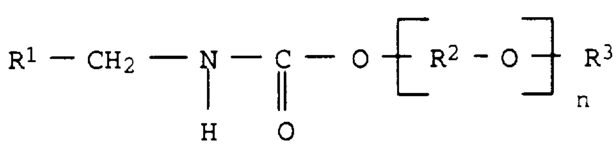

I

worin bedeuten

$R^1$ einen von Isobuten und 0 bis 30 Gew.-% n-Buten abgeleiteter Polybutyl- oder Polyisobutylrest mit einem Molekulargewicht von 250 bis 5000,

$R^2$ einen ggfs. verzweigten C2-C6-Alkylenrest und

$R^3$ entweder Wasserstoff, wobei n = 1-4 ist, oder einen $C_1$-$C_6$-Alkylrest, wobei n = 0-4.

**2.** Carbamidsäureester nach Anspruch 1, dadurch gekennzeichnet, daß $R^2$ der folgenden Formel II entspricht

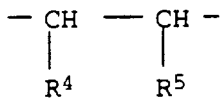

II

worin $R^4$ und/oder $R^5$ Wasserstoff, Methyl oder Ethyl bedeuten, $R^3$ gleich Wasserstoff und n = 1 ist.

**3.** Carbamidsäureester nach Anspruch 1, dadurch gekennzeichnet, daß $R^1$ ein Polyisobutylrest mit einem Molekulargewicht von 500 bis 2000 ist.

**4.** Verfahren zur Herstellung der Carbamidsäureester der Formel I nach Anspruch 1, dadurch gekennzeichnet, daß man Amine der allgemeinen Formel III

$$R^1\text{-}CH_2\text{-}NH_2 \qquad \text{III}$$

in der $R^1$ die im Anspruch 1 angegebene Bedeutung hat, mit aktivierten Kohlensäurederivaten der allgemeinen Formel IV in äquimolaren Mengen umsetzt

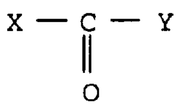

IV

worin X und Y unabhängig voneinander Chlor oder

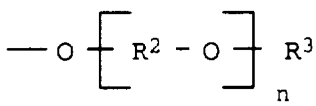

V

bedeuten, wobei $R^2$ und $R^3$ die im Anspruch 1 angegebene Bedeutung haben, mit der Maßgabe, daß X und Y zusammen einen carbocyclischen Ring bilden können, so daß eine Verbindung der folgenden Formel IVa resultiert

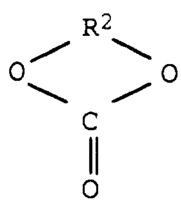

IVa

worin $R^2$ der Formel II in Anspruch 2 entspricht,
wobei in dem Fall, daß X = Y = Cl ist, das aus der Umsetzung von III und IV resultierende Produkt noch mit einem Alkohol der Formel VI

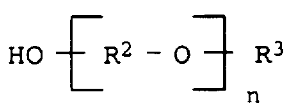

VI

in der $R^2$, $R^3$ und n die im Anspruch 1 angegebenen Bedeutungen haben,
umgesetzt wird.

**5.** Verfahren nach Anspruch 4, dadurch gekennzeichnet, daß es sich bei dem Kohlensäurederivat IV um cyclische

Kohlensäurediester handelt.

6. Verfahren nach Anspruch 5, dadurch gekennzeichnet, daß es sich bei dem Kohlensäurederivat IV um Ethylencarbonat und/oder Propylencarbonat handelt.

7. Kraft- und Schmierstoffe, dadurch gekennzeichnet, daß sie Carbamidsäureester der allgemeinen Formel I gemäß Anspruch 1 enthalten.

8. Kraftstoffe nach Anspruch 7, dadurch gekennzeichnet, daß sie 10 bis 5000 ppm Carbamidsäureester der allgemeinen Formel I enthalten.

9. Kraftstoffe nach Anspruch 7, dadurch gekennzeichnet, daß sie neben dem Carbamidsäureester der Formel I ein Kraftstoff-Detergens als zusätzliches Additiv enthalten.

10. Schmierstoffe nach Anspruch 7, dadurch gekennzeichnet, daß sie 0,1 bis 6 Gew.-% Carbamidsäureester der allgemeinen Formel I enthalten.

**Claims**

1. A carbamate of the following formula I

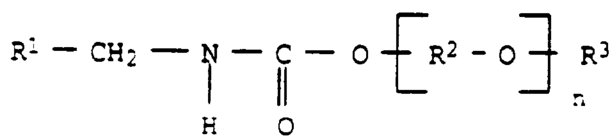

I

where $R^1$ is a polybutyl or polyisobutyl radical derived from isobutene and from 0 to 30% by weight of n-butene and having a molecular weight of from 250 to 5,000, $R^2$ is straight-chain or branched $C_2$-$C_6$-alkylene and $R^3$ is either hydrogen, n being 1-4, or $C_1$-$C_6$-alkyl, n being 0-4.

2. A carbamate as claimed in claim 1, wherein $R^2$ is of the following formula II

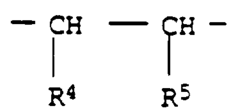

II

where $R^4$ and/or $R^5$ are hydrogen, methyl or ethyl, $R^3$ is hydrogen and n is 1.

3. A carbamate as claimed in claim 1, wherein $R^1$ is a polyisobutyl radical having a molecular weight of from 500 to 2,000.

4. A process for the preparation of a carbamate of the formula I as claimed in claim 1, wherein an amine of the formula III

$$R^1\text{-}CH_2\text{-}NH_2 \qquad III$$

where $R^1$ has the meanings stated in claim 1, is reacted with an activated carbonic acid derivative of the formula IV in equimolar amounts

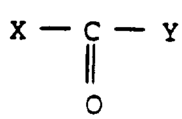

IV

where X and Y independently of one another are each chlorine or

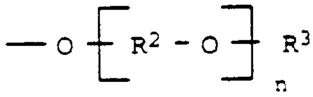 **V**

where $R^2$ and $R^3$ have the meanings stated in claim 1, with the proviso that X and Y together may form a carbocyclic ring so that a compound of the following formula IVa results

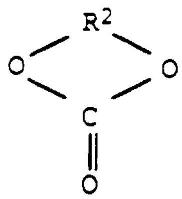 **IVa**

where $R^2$ is of the formula II in claim 2, and, where X and Y are each Cl, the product resulting from the reaction of III and IV is furthermore reacted with an alcohol of the formula VI

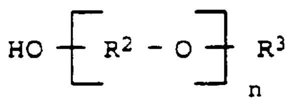 **VI**

where $R^2$, $R^3$ and n have the meanings stated in claim 1.

**5.** A process as claimed in claim 4, wherein the carbonic acid derivative IV is a cyclic diester of carbonic acid.

**6.** A process as claimed in claim 5, wherein the carbonic acid derivative IV is ethylene carbonate and/or propylene carbonate.

**7.** A fuel or lubricant, which contains a carbamate of the formula I as claimed in claim 1.

**8.** A fuel as claimed in claim 7, which contains from 10 to 5,000 ppm of a carbamate of the formula I.

**9.** A fuel as claimed in claim 7, which, in addition to a carbamate of the formula I, contains a fuel detergent as an additional additive.

**10.** A lubricant as claimed in claim 7, which contains from 0.1 to 6% by weight of a carbamate of the formula I.

**Revendications**

**1.** Esters de l'acide carbamique répondant à la formule I suivante

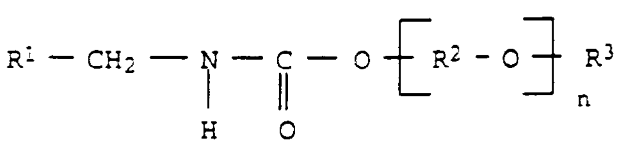 I

dans laquelle

$R^1$ représente un reste polybutyle ou polyisobutyle dérivé d'isobutylène et de 0 à 30% en poids de n-butylène, ayant un poids moléculaire de 250 à 5000,
$R^2$ représente un reste alkylène en $C_2$-$C_6$ éventuellement ramifié et
$R^3$ représente soit un atome d'hydrogène, auquel cas n = 1-4, soit un reste alkyle en $C_1$-$C_6$, auquel cas n = 0-4.

**2.** Esters de l'acide carbamique selon la revendication 1, caractérisés en ce que $R^2$ répond à la formule II suivante

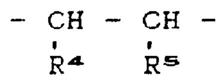

II

dans laquelle $R^4$ et/ou $R^5$ représentent des atomes d'hydrogène ou des restes méthyle ou éthyle, $R^3$ est mis pour un atome d'hydrogène et n = 1.

3. Esters de l'acide carbamique selon la revendication 1, caractérisés en ce que R' est un reste polyisobutyle ayant un poids moléculaire de 500 à 2000.

4. Procédé de préparation des esters de l'acide carbamique de formule I selon la revendication 1, caractérisé en ce que l'on fait réagir, en quantités équimolaires, des amines de formule générale III

$$R^1\text{-}CH_2\text{-}NH_2 \qquad \text{III}$$

dans laquelle R' a la signification donnée dans la revendication 1, avec des dérivés d'acide carbonique activés de formule générale IV

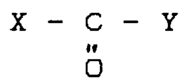

IV

dans laquelle X et Y représentent, indépendamment l'un de l'autre, des atomes de chlore ou des groupements

$$-O-\left[R^2-O\right]_n-R^3 \qquad \text{V}$$

$R^2$ et $R^3$ ayant les significations données dans la revendication 1, étant spécifié que X et Y peuvent former ensemble un noyau carbocyclique, de sorte qu'il en résulte un composé répondant à la formule IVa suivante

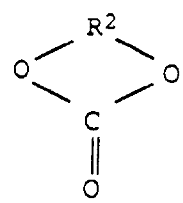

IVa

dans laquelle $R^2$ répond à la formule II dans la revendication 2, et,
dans le cas où X = Y = C1, le produit résultant de la réaction de III et de IV est encore mis en réaction avec un alcool de formule VI

$$HO-\left[R^2-O\right]_n-R^3 \qquad \text{VI}$$

dans laquelle $R^2$, $R^3$ et n ont les significations données dans la revendication 1.

5. Procédé selon la revendication 4, caractérisé en ce qu'il s'agit, en ce qui concerne le dérivé d'acide carbonique IV, d'un diester cyclique d'acide carbonique.

6. Procédé selon la revendication 5, caractérisé en ce qu'il s'agit, en ce qui concerne le dérivé d'acide carbonique IV, de carbonate d'éthylène et/ou de carbonate de propylène.

7. Carburants et lubrifiants, caractérisés en ce qu'ils contiennent des esters de l'acide carbamique de formule générale I selon la revendication 1.

8. Carburants selon la revendication 7, caractérisés en ce qu'ils contiennent 10 à 5000 ppm d'esters de l'acide carbamique de formule générale I.

**9.** Carburants selon la revendication 7, caractérisés en ce qu'ils contiennent, en plus de l'ester d'acide carbamique de formule I, un détergent pour carburants en tant qu'additif supplémentaire.

**10.** Lubrifiants selon la revendication 7, caractérisés en ce qu'ils contiennent 0,1 à 6% en poids d'esters de l'acide carbamique de formule générale I.